# EUROPÄISCHE PATENTSCHRIFT

(11) **EP 1 060 602 B1**
(45) Veröffentlichungstag und Bekanntmachung des Hinweises auf die Patenterteilung: **26.05.2004**
(21) Anmeldenummer: 98966399.2
(22) Anmeldetag: 22.12.1998
(51) Int. Cl.: H04L 27/26, H04L 27/34

(54) **VERFAHREN ZUR SPITZENWERTREDUKTION BEI EINTRÄGER-MODULIERTEN ODER MEHRTRÄGER-MODULIERTEN, DIGITALEN SENDESIGNALEN**
METHOD FOR REDUCING PEAK VALUES IN SINGLE-CARRIER MODULATED OR MULTI-CARRIER MODULATED DIGITAL TRANSMITTER SIGNALS
PROCEDE POUR LA REDUCTION DE LA VALEUR DE CRETE DANS DES SIGNAUX D'EMISSION NUMERIQUES A MODULATION PAR PORTEUSE UNIQUE OU PAR PORTEUSES MUTLIPLES

(30) Priorität: 03.03.1998 DE 19808993
(43) Veröffentlichungstag der Anmeldung: 20.12.2000
(73) Patentinhaber: Fraunhofer-Gesellschaft zur Förderung der angewandten Forschung e.V., 80686 München (DE)
(72) Erfinder: SCHILL, Dietmar, D-90429 Nürnberg (DE); EBERLEIN, Ernst, D-91091 Grossenseebach (DE); GERHÄUSER, Heinz, D-91344 Waischenfeld (DE)
(74) Vertreter: Schoppe, Fritz, Dipl.-Ing.
(86) Internationale Anmeldenummer: PCT/EP1998/008414
(87) Internationale Veröffentlichungsnummer: WO 1999/045682

(56) Entgegenhaltungen:
- EP-A- 0 725 510
- EP-A- 0 735 731
- US-A- 5 268 938
- US-A- 5 621 762

## Beschreibung

Die vorliegende Erfindung bezieht sich auf ein Verfahren zur Spitzenwertreduktion und insbesondere auf Verfahren zur Spitzenwertreduktion von Einträger-modulierten, digitalen Sendesignalen und zur Spitzenwertreduktion von Mehrträgermodulierten, digitalen Sendesignalen.

Bei der Übertragung von digitalen Sendesignalen ist das Verhältnis von Signalspitzenleistung zur mittleren Leistung des Sendesignals, was auch als Crest-Faktor bezeichnet wird, von großem Interesse. Von besonderer Wichtigkeit ist der Crest-Faktor bei leistungsstarken Verstärkerendstufen, wie sie beispielsweise im Rundfunksektor Verwendung finden. Jedwedige Verringerung des Crest-Faktors führt zu einer erhöhten Energieausbeute und damit verringerten Betriebs- und Anschaffungskosten der Verstärkerendstufe, da diese mit einem geringeren Back-Off, also näher an ihrem optimalen Arbeitspunkt, betrieben werden kann.

Aus dem Stand der Technik sind lediglich Verfahren zur Reduktion eines Spitzenwertes bei Sendesignalen, welche unter Verwendung von Mehrträger-Modulationsverfahren moduliert wurden, bekannt. Aus der deutschen Patentanmeldung 19635813 mit dem Titel "Verfahren zur Reduktion des Spitzenwertfaktors bei digitalen Übertragungsverfahren" wird ausschließlich auf den Fall der Mehrträgermodulation unter Verwendung einer schnellen Fourier Transformation (FFT = Fast Fourier Transformation) bezug genommen.

Ähnliche Verfahren, die sich mit der Reduktion des Spitzenwertfaktors bei digitalen Sendesignalen, die unter Verwendung von Mehrträger-Modulationsverfahren moduliert wurden, beschäftigen sind beispielsweise aus M. Pauli und H.-P. Kuchenbecker "Reduzierung der durch Nichtlinearitäten hervorgerufenen Außerbandstrahlung bei einem Mehrträgerverfahren", ITG-Fachbericht 136 "Mobile Kommunikation", A. Jones, T. wilkinson und S. Barton "Block coding schemes for reduction of peak to mean envelope power ratio of multi-carrier transmission schemes", Electronic Letters, Dezember 1994, D. Wulich, "Reduction of peak to mean ratio of multi-carrier modulation using cyclic coding", Electronic Letters, Februar 1996, M. Friese "Multicarrier modulation with low peak-to-average power ratio", Electronic Letters, April 1996 und A. Kamerman und A. Krishnakumar "Reduction of peak to average power ratio for OFDM", European Patent Application No. 95306079.5 vom 31.08.1995 bekannt.

Aus dem oben genannten Stand der Technik sind somit keinerlei Aktivitäten bekannt, die explizit auf die Reduktion des Spitzenwertes bei Sendesignalen beziehen, die mittels eines Trägers oder mittels mehrerer Träger moduliert wurden. Beim sogenannten Einträgerverfahren, also einem Verfahren, bei dem das digitale Sendesignal mittels eines Trägers moduliert wird, kann höchstens die Modulation mittels des Offset-Quadrature-Phase-Shift-Keying (O-QPSK) als Versuch zur Spitzenwertreduzierung gewertet werden, jedoch führt das O-QPSK zu keiner befriedigenden Reduktion des Spitzenwertes.

In der Veröffentlichung von S. Sheperd, J. Orriss and S. Barton, "Asymptotic Limits in Peak Envelope Power Reduction by Redundant Coding in Orthogonal Frequency-Division Multiplex Modulation", IEEE Transactions on Communications, vol. 46, no. 1, Januar 1998, pp. 5 - 10 ist eine Vermutung über das asymptotische Verhalten der Spitzenwertreduktion unter Verwendung einer Codierung dargestellt, jedoch kann dieser Veröffentlichung keinerlei Aussage dahingehend entnommen werden, wie solche Codes beschaffen sein müssen. Ferner ist dieser Schrift auch kein Konstruktionshinweis für solche Codes oder ein Beispiel derselben zu entnehmen.

Ferner wird noch auf die Veröffentlichung John G. Proakis "Digital Communications", 2. Auflage 1989, McGraw-Hill, Seite 532ff, hingewiesen, welche sich mit der digitalen Nachrichtenübertragung beschäftigt.

Die US-A-5, 621, 762 beschreibt eine Spitzenwertunterdrückung, bei der die digitalen Daten auf ein Konstellationsdiagramm abgebildet werden, um Datensymbole zu erzeugen. In einer Skalierungstufe werden diejenigen Symbole verändert (verzerrt), die bei einem nachfolgenden Filterschritt im Sendeimpulsfilter zu einem Überschreiten des Spitzenwertes führen würden. Nur solche Verzerrungen des Ausgangssignals werden zugelassen, die innerhalb eines Kreises mit kleinem Radius um den ursprünglichen Punkt liegen, so daß es am Empfänger zu einer fehlerfreien Rückgewinnung des Sendesignals kommen kann. Somit ist eine fehlerfreie Rückgewinnung der Rohdaten erforderlich, was zu einer stark eingeschränkten Auswahl der möglichen Verzerrungen des Ausgangssignals führt.

Die EP 0 725 510 A betrifft ein Verfahren, um Signalspitzenwerte in einem Übertragungsgerät zu reduzieren. Symbole, die zu einer Überschreitung des Spitzenwertes führen, werden reduziert, indem ein Einstellsymbol dem zu sendenden Symbol hinzugefügt wird, so daß der Betrag des zu sendenden Symbols erniedrigt wird. Das Einstellsymbol wird durch Verwendung von Teilkanälen, die nicht für die Datenübertragung verwendet werden, erzeugt. Für die Teilkanäle werden Vektoren erzeugt, die zu dem Symbol derart hinzugefügt werden, daß bei der Ausführung einer inversen Fouriertransformation die Beiträge der hinzugefügten Vektoren Spitzenwerte von denjenigen Teilkanälen, die zur Datenübertragung verwendet werden, reduziert werden.

Ausgehend von diesem Stand der Technik liegt der vorliegenden Erfindung die Aufgabe zugrunde, ein Verfahren zur Spitzenwertreduktion von Einträger-modulierten oder Mehrträger-modulierten, digitalen Sendesignalen zu schaffen, welche auf einfache Art und Weise eine effektive und wirksame Reduzierung des Spitzenwertes in den Sendesignalen ermöglicht.

Diese Aufgabe wird durch ein Verfahren gemäß Anspruch 1 und durch ein Verfahren gemäß Anspruch 8 gelöst.

Gemäß einem bevorzugten Ausführungsbeispiel der vorliegenden Erfindung wird das Ersatzsymbol durch Einfügen eines Bitfehlers in das zu ersetzende Sendesymbol erzeugt.

Gemäß einem weiteren bevorzugten Ausführungsbeispiel der vorliegenden Erfindung wird als Ersatzsymbol ein beliebiger Punkt in der komplexen Ebene bestimmt, wobei das Ersatzsymbol bei dessen Empfang und Umwandlung in ein Sendesymbol eine geringe Hammingdistanz zum ursprünglichen Sendesymbol aufweist.

Gemäß einem weitern bevorzugten Ausführungsbeispiel der vorliegenden Erfindung umfaßt das Mehrträgersignal zur Modulation des Sendesignals weniger als 50 Träger, bevorzugterweise 10 bis 20 Träger.

Ein Vorteil der vorliegenden Erfindung besteht darin, daß mittels der oben genannten Verfahren kein zusätzlicher Aufwand am Empfänger des digitalen Signals erforderlich ist, da das Ersatzsymbol unter Anwendung einer zur Schaffung des Sendesymbols verwendeten Codierung fehlerfrei in das ursprüngliche Sendesymbol umwandelbar ist. Ein weiterer Vorteil der vorliegenden Erfindung besteht darin, daß die zur Verfügung gestellte Redundanz effektiv zwischen Korrektur von Fehlern aufgrund des Kanalrauschens und der Spitzenwertreduktion aufgeteilt werden kann.

Wiederum ein weiterer vorteil besteht darin, daß nur ein Codierer/Decodierer-Satz benötigt wird.

Ferner liegt ein Vorteil der vorliegenden Erfindung darin, daß zur Ausführung des erfindungsgemäßen Verfahrens und insbesondere zum Decodieren des abgesendeten Sendesignals keinerlei Signalisierung von Informationen zwischen dem Sender und dem Empfänger bezüglich des Ersatzsymbols erforderlich ist.

Wiederum ein weiterer Vorteil der vorliegenden Erfindung besteht darin, daß sowohl für den Fall der Verwendung eines Trägers oder von mehreren Trägern kein spezieller Code zur Erzeugung der Ersatzsymbole benötigt wird, sondern daß die Kanaldecodierung diese Aufgabe gleich miterledigt.

Nachfolgend werden unter Bezugnahme auf die beiliegenden Zeichnungen bevorzugte Ausführungsbeispiele der vorliegenden Erfindung näher beschrieben. Es zeigen:
- Fig. 1: ein Blockdiagramm eines herkömmlichen, digitalen Einträger-Sendezweiges;
- Fig. 2: ein Blockdiagramm eines gegenüber dem in Fig. 1 dargestellten Blockdiagramm erweiterten, digitalen Einträger-Sendezweig zur Ausführung des Verfahrens gemäß der vorliegenden Erfindung; und
- Fig. 3: einen erweiterten, digitalen Mehrträger-Sendezweig, zur Ausführung des erfindungsgemäßen Verfahrens gemäß einem weiteren Ausführungsbeispiel.

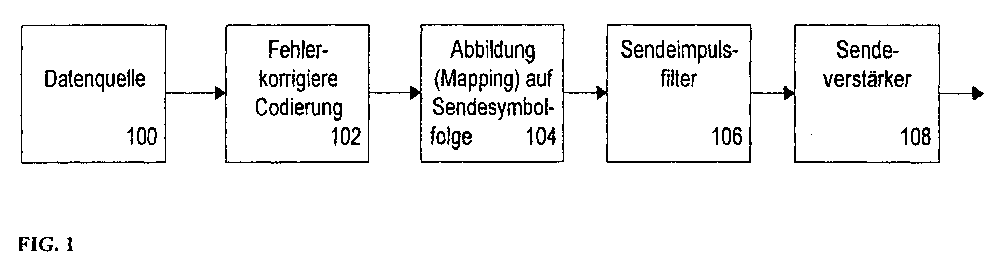

Bevor nachfolgend auf bevorzugte Ausführungsbeispiele der vorliegenden Erfindung näher eingegangen wird, erfolgt zunächst anhand der Fig. 1 eine kurze Beschreibung eines herkömmlichen, digitalen Einträger-Sendezweiges. Hinsichtlich der nachfolgenden Beschreibung wird darauf hingewiesen, daß in den Zeichnungen gleiche Elemente mit gleichen Bezugszeichen versehen sind.

Der in Fig. 1 dargestellte Einträger-Sendezweig umfaßt eine Datenquelle 100, deren Ausgang mit dem Eingang eines Blocks 102 verbunden ist, welcher eine fehlerkorrigierte Codierung der von der Datenquelle 100 erhaltenen Signale durchführt. Der Ausgang des Blocks 102 ist mit dem Eingang eines Blocks 104 verbunden, welcher die codierten Signale vom Block 102 erhält und diese auf eine Sendesymbolfolge abbildet (mapping), so daß am Ausgang des Blocks 104 eine sendesymbolfolge anliegt. Diese Sendesymbolfolge wird in ein Sendeimpulsfilter 106 eingegeben, dessen Ausgangssignal wiederum einem Sendeverstärker 108 zugeführt wird, der das verstärkte Signal ausgibt und an die geeigneten Elemente zur Übertragung weiterleitet.

Das in Fig. 1 dargestellte klassische bzw. herkömmliche Blockschaltbild des Sendeteils eines digitalen Übertragungsverfahrens mit Einträgermodulation erzeugt Signale, deren Crest-Faktor entscheidend vom Sendeimpulsformungsfilter 106 beeinflußt wird. Es sei beispielsweise ein im Frequenzbereich rechteckförmiges Filter angenommen, was im Zeitbereich in einem Sendeimpuls resultiert, der eine SINx/x-Funktion ist. Da diese Funktion nur mit 1/x abklingt, überlagern sich die Sendeimpulse vieler zeitlich aufeinander gesendeter Sendesymbole merklich und eine "ungünstige" Sendesymbolfolge kann zu einer additiven Überlagerung all dieser Impulse führen, was wiederum zu einem hohen Spitzenwert führt. Eine Linderung schafft hier die Verwendung eines besseren Sendeimpulsformers 106. Häufig werden hierfür sogenannte"raised-cosine-Filter" oder auch "root-raised-cosine-Filter" verwendet. Beim zuerst genannten Filter fällt der Sendeimpuls mit der dritten Potenz über der Zeit ab, was die Intersymbolinterferenz und auch die Zahl der sich überlagernden Sendeimpulse abhängig vom gewählten Roll-Off-Faktor deutlich verringert, wie dies z. B. aus der veröffentlichung John. G. Proakis "Digital Communications", 2. Auflage 1989, McGraw-Hill, Seite 532ff bekannt ist. In der Praxis wird eine Beschränkung auf weniger als 10 sich überlagernde Einzelimpulse ausreichend sein, und die Zahl der einzubeziehenden Sendesymbole kann auf jeden Fall für ein Übertragungssystem einmal auf einen konstanten Wert N, abhängig vom Roll-Off-Faktor und der nachfolgend beschriebenen maximal gewünschten Reduktion des Spitzenwertes bzw. des Crest-Faktors eingestellt werden.

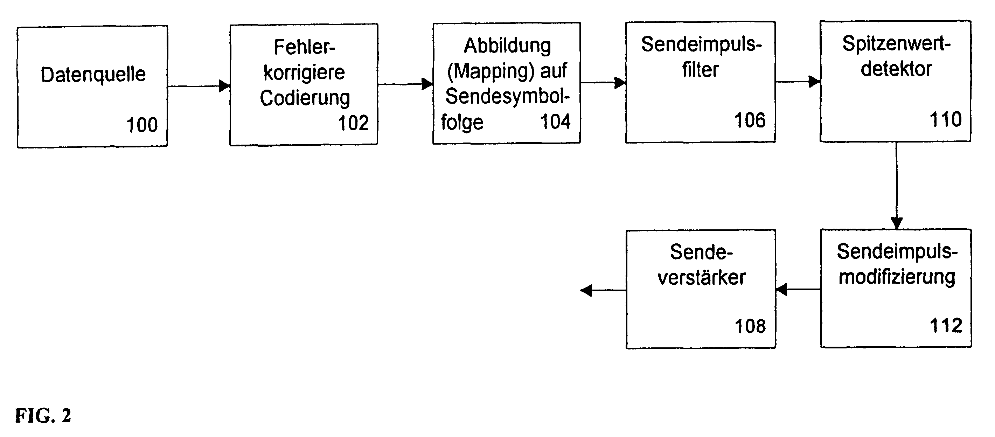

Nachfolgend wird anhand der Fig. 2 das erfindungsgemäße Verfahren gemäß einem ersten Ausführungsbeispiel näher beschrieben, wobei eine erneute Beschreibung der anhand der Fig. 1 bereits beschriebenen Elemente nicht mehr erfolgt. Wie aus Fig. 2 zu erkennen ist, ist zwischen das Sendeimpulsfilter 106 und den Sendeverstärker 108 zunächst ein Spitzenwertdetektor 110 und anschließend eine Sendeimpuls-Modifizierungseinheit 112 geschaltet. Der Spitzenwertdetektor 110 empfängt das Ausgangssignal des Sendeimpulsfilters 106 und gibt den erfaßten Spitzenwert an die Sendeimpulsmodifizierung 112 weiter, die abhängig von dem erfaßten Spitzenwert eine Modifizierung des Sendeimpulses durchführt oder auch nicht. Von der Sendeimpuls-Modifizierungseinheit wird das Signal an den Sendeverstärker 108 angelegt.

Gemäß einem Ausführungsbeispiel der vorliegenden Erfindung, wird über die am Ausgang des Sendeimpulsfilters 106 anliegende Folge von Sendesymbolen ein Fenster der Länge N gelegt, welches beispielsweise als Schieberegister mit N Speicherzellen realisiert werden kann. Anhand der aktuellen N Sendesymbole wird im Detektor 110 der Crest-Faktor berechnet. Die Berechnung erfolgt durch die Bestimmung des maximalen Spitzenwertes in der Sendesequenz oder der Folge von N Sendesymbolen, und dieser Wert wird anschließend durch den aus den N-Symbolen bestimmten Effektivwert geteilt, um den erwünschten Crest-Faktor zu erhalten. Anschließend wird überprüft, ob die vorliegende Sendesequenz, also die aktuellen Sendesymbole den als maximal zulässig vorgegebenen Crest-Faktor verletzen, d. h. überschreiten. Ist dies nicht der Fall, so wird das "älteste" Symbol, also dasjenige Symbol, welches zur Weiterleitung an den Sendeverstärker 108 ansteht, ohne Reduktion des Crest-Faktors an den Sendeverstärker 108 weitergegeben, wie dies auch bei dem in Fig. 1 dargestellten Beispiel erfolgt. Anschließend wird ein neues Symbol in das Fenster zur Erfassung des Crest-Faktors eingelesen, wobei vorher alle verbliebenen Werte um einen Platz verschoben werden.

Berechnet der Detektor eine Verletzung des maximal zulässigen Crest-Faktors, so wird das Symbol, welches am meisten zu der Crest-Faktor-Spitze beiträgt modifiziert. Obwohl in dem oben beschriebenen Ausführungsbeispiel die Rede davon war, daß der Crest-Faktor erfaßt und reduziert wird, ist das vorliegende Verfahren ebenso anwendbar, wenn anstelle des Crest-Faktors nur der Spitzenwert in der aktuellen Sendesymbolfolge bestimmt wird, und dasjenige Symbol modifiziert wird, welches am meisten zu dem Spitzenwert beiträgt.

Die Modifikation der Symbole erfolgt gemäß einem ersten Ausführungsbeispiel derart, daß in das Symbol gezielt Bitfehler eingefügt werden, so daß ein anderes gültiges Codesignal gesendet wird. Die Bitinversion wird hierbei so ausgeführt, daß das jetzt mit einem Fehler behaftete Symbol den Spitzenwert maximal senkt. Vorteilhafterweise hat das Ersatzsymbol, welches gesendet werden soll, eine möglichst kleine Hammingdistanz zum ursprünglichen Signal und hat gleichzeitig einen Spitzenwert, der den komplexen Spitzenwert des ursprünglichen Signals möglichst antipodal entgegengesetzt ist, um diesen maximal zu reduzieren.

Je höher die Stufenzahl der zugrundeliegenden Modulation ist, um so einfacher läßt sich dieser Effekt erzielen. Besonders einfach ist dies bei einem System, welches Multi-Level-Codes verwendet, da hier große euklidische Distanzen zwischen den Punkten auftreten, welche sich aber nur in einem Bit unterscheiden. Demgegenüber ist die Erzielung dieses Effekts bei einem Gray-codierten System besonders schwer, da hier die Symbole mit kleiner Hammingdistanz eng beieinander liegen.

Anstelle der oben beschriebenen gezielten Einbringung eines Bitfehlers kann das Ersatzsymbol gemäß einem zweiten Ausführungsbeispiel derart erzeugt werden, daß ein Punkt oder Ersatzsymbol gesendet wird, welches nicht in der regulären Konstellation, also in der regulären Sendesymbolfolge enthalten ist, wobei der Punkt bzw. das Ersatzsymbol jedoch die folgenden Eigenschaften aufweist:
- im Empfänger wird dieses Ersatzsymbol zu einem Symbolpunkt entschieden, welcher eine möglichst kleine Hammingdistanz zum ursprünglich zu sendenden Symbolpunkt hat. Der Ersatzpunkt bzw. das Ersatzsymbol liegt im Entscheidungsgebiet des Symbolpunktes mit kleiner Hammingdistanz zum Originalsymbol.
- Das Ersatzsymbol ist in Betrag und Phase der detektierten Spitzenwertverletzung maximal entgegengesetzt und reduziert diese somit maximal.

Das gerade beschriebene Verfahren zur Verwendung von Konstellationszwischenpunkten ist besonders bei niederstufigen Einträgerverfahren, wie z. B. den Quadrature-Phase-Shift-Keying (QPSK) interessant, da hier die Zahl der zur Korrektur zur Verfügung stehenden Signalpunkte sehr klein ist.

Bei dem in Fig. 2 dargestellten Ausführungsbeispiel wird die im Bearbeitungsfenster liegende Symbolfolge solange modifiziert, bis der maximal zugelassene Spitzenwert oder der maximal zugelassene Crest-Faktor eingehalten wird. Dann wird, wie bereits oben beschrieben, das "älteste" Symbol gesendet, die verbleibenden Symbole um einen Platz weitergeschoben, und ein neues Symbol in die Bearbeitung miteinbezogen.

Wie oben ausgeführt wurde, fügt dieser Algorithmus gezielt Fehler (direkt oder indirekt) in das digitale Sendesignal ein. Diese Fehler können in einem Empfänger mit Hilfe der fehlerkorrigierten Codes, die zur Codierung des Sendesignals im Block 102 verwandt wurden, wieder rückgängig gemacht werden.

Gemäß einem weiteren Ausführungsbeispiel kann es wünschenswert sein, nur die allergrößten Spitzenwerte oder Crest-Faktoren auszuschließen. In diesem Fall wird der dargestellte Spitzenwertdetektor 110 mit Hilfe einer Tabelle realisiert, in welcher die Anzahl der unerwünschten Sendesymbolfolgen gespeichert ist. Jeder unerwünschten Sendesymbolfolge ist eine vorberechnete Ersatzfolge zugeordnet, die dann anstelle des unerwünschten Sendesymbols gesendet wird.

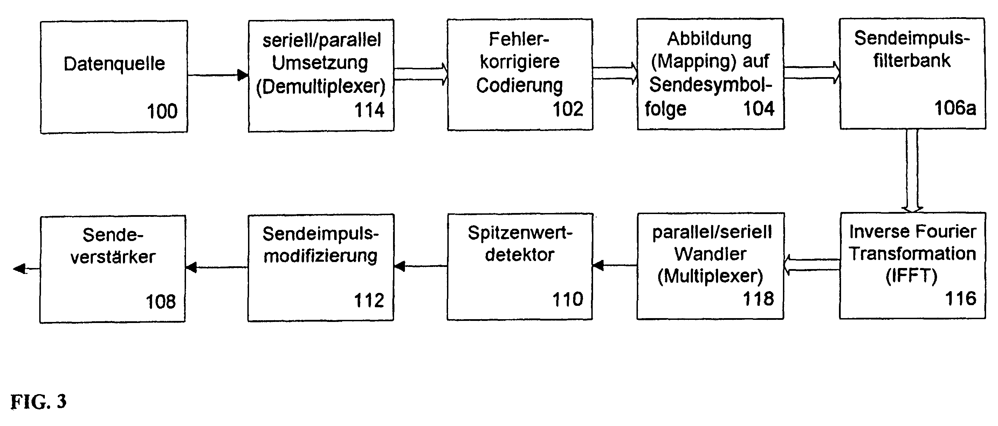

Anhand der Fig. 3 wird nachfolgend ein weiteres Ausführungsbeispiel der vorliegenden Erfindung näher beschrieben, wobei auf eine erneute Beschreibung der bereits beschriebenen Elemente verzichtet wird. Diese Elemente sind mit den gleichen Bezugszeichen wie in den Fig. 1 und 2 versehen. Das anhand der Fig. 3 beschriebene Blockdiagramm ist zur Verwendung eines Verfahrens vorgesehen, bei dem das angewendete Modulationsverfahren keine reine Einträger-Modulation ist, sondern die Informationen im Frequenzmultiplex-Verfahren auf mehreren Kanälen parallel übertragen wird. Zusätzlich zu den bereits beschriebenen Blöcken ist zwischen der Datenquelle 100 und dem Codierungsblock 102 ein Block zur Seriell/Parallel-Umsetzung (Demultiplexer) 114 vorgesehen. Anstelle der in Fig. 1 und 2 beschriebenen Sendeimpulsfilter 106 ist dieses gemäß dem in Fig. 3 dargestellte Ausführungsbeispiel durch eine Sendeimpuls-Filterbank 106a gebildet. Zwischen der Sendeimpuls-Filterbank 106a und dem Spitzenwertdetektor 110 ist ein Block 116 angeordnet, welcher eine inverse schnelle Fourier Transformation (IFFT = Inverse Fast Fourier Transformation) durchführt. Der Ausgang des Blocks 116 ist mit dem Eingang eines Parallel/Seriell-Wandlers (Multiplexer) 118 verbunden, dessen Ausgang wiederum mit dem Eingang des Spitzenwertdetektors 110 verbunden ist.

Für den Crest-Faktor wird bei dem in Fig. 3 dargestellten Ausführungsbeispiel jetzt der Effekt, welcher durch die zeitliche Überlagung der frequenzmäßig getrennten Informationsteilfolgen hervorgerufen wird, dominant. Dies bedeutet, daß das Schieberegister, welches die Symbolfolge eines einzelnen Trägers beinhaltet, gegenüber einer reinen Einträger-Modulation stark verkürzt werden kann. Gemäß einem Ausführungsbeispiel ist es ausreichend, daß das Schieberegister nur ein einziges Sendesymbol aufweist. Verwendet das System z. B. M-Träger im Frequenzmultiplex-Betrieb, so müssen jetzt nur M-Schieberegister parallel verwaltet werden. Gemäß einem bevorzugten Ausführungsbeispiel verwendet das anhand der Fig. 3 beschriebene Verfahren eine moderate Anzahl von Trägern, wobei die Anzahl M der Träger bei diesem Verfahren kleiner als 50 ist, und bevorzugterweise in einem Bereich zwischen 10 und 20 Trägern liegt. Wie im Fall der Einträgermodulation übernimmt der Spitzenwertdetektor 110 die Erfassung von großen Spitzenwerten. Wird ein solcher Wert erfaßt, so können bei moderater Trägeranzahl (M ≤ 50) die Träger mit den dominantesten Anteilen rechnerisch effizient bestimmt werden, und wie beim Fall der Einträger-Modulation können diese durch Einfügen von Bitfehlern oder durch die Verwendung von Konstellationszwischenpunkten kompensiert werden. Das Einfügen von Bitfehlern oder die Verwendung von Konstellationszwischenpunkten wurde bereits oben anhand der Fig. 2 näher beschrieben. Hinsichtlich des in Fig. 3 dargestellten Ausführungsbeispiels wird darauf hingewiesen, daß der IFFT-Block 116 optional ist, jedoch in der Praxis der einfachen Implementierbarkeit wegen bevorzugterweise verwendet wird.

Wie aus der obigen Beschreibung der bevorzugten Ausführungsbeispiele der vorliegenden Erfindung deutlich wird, wird hierbei keinerlei Aussage über die verwendeten Fehlerkorrekturcodes (Block 102) getroffen, und dementsprechend allgemein ist der Block 102 auch gehalten. Tatsächlich ist die Art und Weise der verwendeten Fehlerkorrektur-Codes für die vorliegende Erfindung nicht maßgebend, da der Einsatz der erfindungsgemäßen Verfahren nicht von den verwendeten Fehlerkorrektur-Codes abhängt.

## Patentansprüche

1. Verfahren zur Spitzenwertreduktion von Einträger-modulierten, digitalen Sendesignalen, mit folgenden Schritten:
a) auf der Grundlage einer Mehrzahl (N) von in dem digitalen Signal enthaltenen Sendesymbolen, Bestimmen des Spitzenwertes aus der Mehrzahl von Sendesymbolen; und
b) falls der bestimmte Spitzenwert einen vorbestimmten Wert übersteigt, Erzeugen zumindest eines Ersatzsymbols, das das dem bestimmten Spitzenwert zugeordnete Sendesymbol ersetzt, wobei das Ersatzsymbol den Spitzenwert absenkt und unter Anwendung einer zur Schaffung der Sendesymbole verwendeten Codierung fehlerfrei in das ursprüngliche Sendesymbol umwandelbar ist;
wobei das erzeugte Ersatzsymbol eine geringe Hammingdistanz zum ursprünglichen Sendesymbol aufweist und dem dem ursprünglichen Sendesymböl zugeordnete Spitzenwert antipodisch oder in Größe und Phase entgegengesetzt ist.

2. Verfahren nach Anspruch 1, bei dem das Ersatzsymbol durch Einfügen eines Bitfehlers in das zu ersetzende Sendesymbol erzeugt wird.

3. Verfahren nach Anspruch 1, bei dem als Ersatzsymbol ein beliebiger Punkt der komplexen Ebene bestimmt wird, wobei das Ersatzsymbol bei dessen Empfang und Umwandlung in ein Sendesymbol eine geringe Hammingdistanz zum ursprünglichen Sendesymbol aufweist.

4. verfahren nach einem der Ansprüche 1 bis 3, bei dem die Schritte a) und b) wiederholt werden, bis der Spitzenwert für die Mehrzahl von Sendesymbolen den vorbestimmten Wert nicht mehr übersteigt.

5. Verfahren nach Anspruch 4, mit folgenden Schritten:
c) Senden des ersten Symbols aus der Mehrzahl der Sendesymbole;
d) Einbringen eines neuen Sendesymbols in die Mehrzahl von Sendesymbolen, um eine neue Folge von Sendesymbolen zu erzeugen; und
e) Durchführen der Schritte a) und b) bezüglich der neuen Folge von Sendesymbolen.

6. Verfahren nach einem der Ansprüche 1 bis 5, bei dem, falls im Schritt a) keine Überschreitung des Spitzenwertes bestimmt wird, das erste, unveränderte Sendesymbol gesendet wird.

7. Verfahren nach Anspruch 1, bei dem im Schritt b) das Ersatzsymbol aus einer Tabelle ausgelesen wird, die unerwünschte Sendesymbole und die diesen zugeordneten, vorberechneten Ersatzsymbole enthält.

8. Verfahren zur Spitzenwertreduktion von Mehrträger-modulierten, digitalen Sendesignalen, mit folgenden Schritten:
a) Bestimmen des Spitzenwertes unter Berücksichtigung zumindest eines Sendesymbols für jede Trägerfrequenz; und
b) falls der Spitzenwert einen vorbestimmten Wert übersteigt, Erzeugen eines Ersatzsymbols, das das dem Spitzenwert zugeordnete Sendesymbol ersetzt, wobei das Ersatzsymbol den Spitzenwert absenkt und unter Anwendung einer zur Schaffung der Sendesymbole verwendeten Codierung fehlerfrei in das ursprüngliche Sendesymbol umwandelbar ist;
wobei das erzeugte Ersatzsymbol eine geringe Hammingdistanz zum ursprünglichen Sendesymbol aufweist und dem dem ursprünglichen Sendesymbol zugeordnete Spitzenwert antipodisch oder in Größe und Phase entgegengesetzt ist.

9. Verfahren nach Anspruch 8, bei dem das Ersatzsymbol durch Einfügen eines Bitfehlers in das zu ersetzende Sendesymbol erzeugt wird.

10. Verfahren nach Anspruch 8, bei dem als Ersatzsymbol ein beliebiger Punkt in der komplexen ebene bestimmt wird, wobei das Ersatzsymbol bei dessen Empfang und Umwandlung in ein Sendesymbol eine geringe Hammingdistanz zum ursprünglichen Sendesymbol aufweist.

11. Verfahren nach einem der Ansprüche 8 bis 10, bei dem die Anzahl der verwendeten Träger kleiner als 50 ist.

12. Verfahren nach Anspruch 11, bei dem die Anzahl der verwendeten Träger zwischen 10 und 20 liegt.

## Claims

1. A method for peak value reduction in single-carrier modulated digital transmitter signals, comprising the following steps:
a) on the basis of a plurality of transmitter symbols contained in the digital signal, determining the peak value from the plurality of transmitter symbols; and
b) if the peak value which is determined exceeds a predetermined value, generating at least one replacement symbol which replaces the transmitter symbol assigned to this peak value, the replacement symbol reducing the peak value and being convertible into the original transmitter symbol without error using a coding which was used to create the transmitter symbols;
where the generated replacement symbol has a small Hamming distance to the original transmitter symbol and is opposed antipodally or in magnitude and phase to the peak value assigned to the original transmitter symbol.

2. A method according to claim 1, wherein the replacement symbol is generated by inserting a bit error into the transmitter symbol which is to be replaced.

3. A method according to claim 1, wherein an arbitrary point in the complex plane is chosen as the replacement symbol such that the replacement symbol when it is received and converted into a transmitter symbol has a small Hamming distance to the original transmitter symbol.

4. A method according to one of claims 1 to 3, wherein the steps a) and b) are repeated until the peak value for the plurality of transmitter symbols no longer exceeds the predetermined value.

5. A method according to claim 4, with the following steps:
c) sending the first symbol from the plurality of transmitter symbols;
d) incorporating a new transmitter symbol into the plurality of transmitter symbols to generate a new sequence of transmitter symbols; and
e) performing the steps a) and b) for the new sequence of transmitter symbols.

6. A method according to one of claims 1 to 5, wherein the first, unmodified transmitter symbol is sent if no exceeding of the peak value is determined in step a).

7. A method according to claim 1, wherein in step b) the replacement symbol is read out of a table which contains unwanted transmitter symbols and the precalculated replacement symbols assigned to them.

8. A method for peak value reduction in multi-carrier modulated digital transmitter signals, comprising the following steps:
a) determining the peak value taking account of at least one transmitter symbol for each carrier frequency; and
b) if the peak value exceeds a predetermined value, generating a replacement symbol which replaces the transmitter symbol assigned to this peak value, the replacement symbol reducing the peak value and being convertible into the original transmitter symbol without error using a coding which was used to create the transmitter symbols;
where the generated replacement symbol has a small Hamming distance to the original transmitter symbol and is opposed antipodally or in magnitude and phase to the peak value assigned to the original transmitter symbol.

9. A method according to claim 8, wherein the replacement symbol is generated by inserting a bit error into the transmitter symbol which is to be replaced.

10. A method according to claim 8, wherein an arbitrary point in the complex plane is chosen as the replacement symbol such that the replacement symbol when it is received and converted into a transmitter symbol has a small Hamming distance to the original transmitter symbol.

11. A method according to one of claims 8 to 10, wherein the number of carriers used is less than 50.

12. A method according to claim 11, wherein the number of carriers used lies between 10 and 20.

## Revendications

1. Procédé pour la réduction de la valeur de crête de signaux d'émission numériques à modulation par une porteuse unique, aux étapes suivantes consistant à :
a) sur base d'une pluralité (N) de symboles d'émission contenus dans le signal digital, déterminer la valeur de crête à partir de la pluralité de symboles de transmission ; et
b) si la valeur de crête déterminée dépasse une valeur prédéterminée, générer au moins un symbole de substitution qui remplace le symbole d'émission associé à la valeur de crête déterminée, le symbole de substitution diminuant la valeur de crête et pouvant, par l'application d'un codage utilisé pour la création des symboles d'émission, être converti sans erreur en symbole d'émission original ;
le symbole de substitution généré présentant une faible distance de Hamming par rapport au symbole d'émission original et étant opposé de manière antipodale ou en grandeur et phase à la valeur de crête associée au symbole d'émission original.

2. Procédé selon la revendication 1, dans lequel le symbole de substitution est généré en insérant une erreur de bit dans le symbole d'émission à remplacer.

3. Procédé selon la revendication 1, dans lequel est déterminé, comme symbole de substitution, un point arbitraire dans le plan complexe, le symbole de substitution présentant, à sa réception et conversion en un symbole d'émission, une faible distance de Hamming par rapport au symbole d'émission original.

4. Procédé selon l'une des revendications 1 à 3, dans lequel les étapes a) et b) sont répétées jusqu'à ce que la valeur de crête pour la pluralité de symboles d'émission ne dépasse plus la valeur prédéterminée.

5. Procédé selon la revendication 4, aux étapes suivantes consistant à :
c) émettre le premier symbole parmi la pluralité de symboles d'émission ;
d) introduire un nouveau symbole d'émission dans la pluralité de symboles d'émission, pour générer une nouvelle séquence de symboles d'émission ; et
e) réaliser les étapes a) et b) en ce qui concerne la nouvelle séquence de symboles d'émission.

6. Procédé selon l'une des revendications 1 à 5, dans lequel est envoyé, s'il n'est pas déterminé de dépassement de la valeur de crête à l'étape a), le premier symbole d'émission inchangé.

7. Procédé selon la revendication 1, dans lequel, à l'étape b), le symbole de substitution est lu d'un tableau contenant les symboles d'émission non souhaités et les symboles de substitution précalculés y associés.

8. Procédé pour la réduction de la valeur de crête de signaux d'émission porteuses numériques à modulation par porteuses multiples, aux étapes suivantes consistant à :
a) déterminer la valeur de crête en tenant compte au moins d'un symbole d'émission pour chaque fréquence de porteuse ; et
b) si la valeur de crête excède une valeur prédéterminée, générer un symbole de substitution, qui remplace le symbole d'émission associé à la valeur de crête, le symbole de substitution diminuant la valeur de crête et pouvant, par application d'un codage utilisé pour créer les symboles d'émission, être converti sans erreur en symbole d'émission original ;
le symbole de substitution généré présentant une faible distance de Hamming par rapport au symbole d'émission original et étant opposé antipodalement ou en grandeur et phase à la valeur de crête associée au symbole d'émission original.

9. Procédé selon la revendication 8, dans lequel le symbole de substitution est généré en insérant une erreur de bit dans le symbole d'émission à remplacer.

10. Procédé selon la revendication 8, dans lequel est déterminé, comme symbole de substitution, un point arbitraire dans le plan complexe, le symbole de substitution présentant, à sa réception et conversion en un symbole d'émission, une faible distance de Hamming par rapport au symbole d'émission original.

11. Procédé selon l'une des revendications 8 à 10, dans lequel le nombre de porteuses utilisées est inférieur à 50.

12. Procédé selon la revendication 11, dans lequel le nombre de porteuses utilisées est compris entre 10 et 20.
